# EUROPÄISCHE PATENTSCHRIFT

(11) **EP 2 656 991 B1**
(45) Veröffentlichungstag und Bekanntmachung des Hinweises auf die Patenterteilung: **20.07.2016**
(21) Anmeldenummer: 13164034.4
(22) Anmeldetag: 17.04.2013
(51) Int. Cl.: B29C 31/02, B29C 39/24, B29C 39/42, B29C 31/04, B29C 39/44, B29C 70/48

(54) **VERFAHREN UND VORRICHTUNG ZUM VERGIEßEN VON GIEßHARZ ODER GIEßHARZKOMPONENTEN**
METHOD AND DEVICE FOR CASTING RESIN OR RESIN COMPONENTS
PROCÉDÉ ET DISPOSITIF DE COULÉE DE RÉSINE OU DE COMPOSANTS DE RÉSINE

(30) Priorität: 26.04.2012 DE 102012103668
(43) Veröffentlichungstag der Anmeldung: 30.10.2013
(73) Patentinhaber: Hedrich GmbH, 35630 Ehringshausen (DE)
(72) Erfinder: Mais, Gerhard, 65551 Limburg a. d. Lahn (DE); Steindorf, Hans-Joachim, 35764 Sinn (DE)
(74) Vertreter: Müller, Eckhard

(56) Entgegenhaltungen:
- EP-A1- 0 478 876
- EP-A2- 1 516 714
- WO-A2-2004/087392
- US-A- 4 942 013
- US-A- 5 545 029
- US-A- 5 551 486
- US-A- 6 149 844

## Beschreibung

Die Erfindung betrifft ein Verfahren und eine Vorrichtung zum Vergießen von Gießharz oder Gießharzkomponenten.

Insbesondere betrifft die Erfindung ein Verfahren sowie eine Vorrichtung zur Durchführung des Verfahrens zum Vergießen von Gießharz oder Gießharzkomponenten in wenigstens eine, insbesondere teilweise flexible, Form, wobei das Gießharz mittels wenigstens einer Zuführeinrichtung der wenigstens einen Form zugeführt wird und wobei die wenigstens eine Zuführeinrichtung und/oder die wenigstens eine Form und/oder der wenigstens eine Vorratsbehälter zumindest bereichsweise unter Vakuum stehen.

Verfahren und Vorrichtung der eingangs genannten Art zum Vergießen von Gießharz oder Gießharzkomponenten kommen u.a. bei der Imprägnierung von großen Bauelementen, insbesondere von Faserverbundbauteilen, wie beispielsweise Flügeln von Windkraftanlage, zum Einsatz, wobei der Verguss hierbei insbesondere in teilweise flexible Gießformen erfolgt.

Hierzu ist aus dem Stand der Technik bereits eine Vielzahl von Imprägnierungs-Technologien für Faserverbundbauteile mittels Gießharz bekannt. So werden u.a. in DE 60 307 580 T2 und DE 10 2008 038 620 A1 allgemeine Flüssigharzinfusions-Technologien zum Zuführen von Harz in faserige Verstärkungsmaterialien beschrieben, insbesondere das RTM-Verfahren (Resin Transfer Molding) oder das eingangs erwähnte VaRTM-Verfahren (Vacuum assisted Resin Transfer Molding). Diese Verfahren sehen spezielle Gießharzanlagen vor, in denen verschiedene Gießharzkomponenten in separaten Entgasungseinrichtungen entgast und vor dem Verguss miteinander vermischt werden. Das dabei entstehende reaktive Gießharzgemisch wird danach, z.B. in einem Vorratsbehälter, als sogenannter Batch zwischengelagert und anschließend in entsprechende Formen vergossen.

Aus DE 10 2005 053 691 A1 ist ein System zum Durchführen eines RTM-Verfahrens bekannt, welches ein Werkzeug mit einem Formdeckel und einer Form aufweist, in das ein mit Harz zu verstärkendes Bauteil einlegbar ist. Über eine Vakuumpumpe lässt sich im Inneren des Werkzeugs ein Unterdruck erzeugen, so dass Harz über eine Versorgungsleitung aus einem externen Vorratsbehälter in das Werkzeug und somit in das Bauteil gefördert wird. Darüber hinaus kann in den Vorratsbehälter ein Druckkolben eingebracht werden, um in einer Nachdruckphase zusätzliches Gießharz mit Überdruck in das Werkzeug zu pressen.

Aus DE 602 02 589 T2 ist ebenfalls eine Vorrichtung zum Durchführen eines RTM-Verfahrens bekannt, bei der u.a. das Volumen des in die Form eingespritzten Harzes kontrollierbar ist. Hierzu wird die Anzahl der Umdrehungen der Förderpumpe gemessen. Sofern das im Vorratsbehälter enthaltene Harzvolumen bekannt ist, kann jener Moment detektiert werden, in dem der Vorratsbehälter fast leer ist, so dass rechtzeitig auf einen anderen Vorratsbehälter umgeschaltet werden kann.

In DE 44 45 946 wird eine Vorrichtung zum Zuführen der Einzelkomponenten von flüssigem Mehrkomponenten-Kunststoff an eine Ausgussdüse beschrieben, bei der die Dosierung direkt aus jeweils einem Komponenten-Behälter erfolgt. Dieser besteht aus einem Druckzylinder, in den ein bewegbarer Verdrängerkolben einführbar ist. Zur Vermeidung von Verunreinigungen wird in den Druckzylinder ein dichter, flexibler Beutel eingelegt, in welchen die auszubringende Komponente eingefüllt wird, so dass der Druckzylinder nach einem Produktwechsel nicht mehr gereinigt werden muss.

Die WO 2004/087392 A2 offenbart ein sogenanntes "Composite pressure resin infusion system (COMPRIS)", bei dem Komposit-Bauteile in einer Vorrichtung gefertigt werden, die zum Zwecke der Aufnahme von überschüssigem Harz einen Behälter aufweist, der fest oder auch flexibel ausgebildet sein kann.

Die EP 15 16 714 betrifft ein Flüssigkeitszuführsystem in eine Form, bei der ein flexibler Vorratsbehälter vorgesehen ist, der in Reihe mit einer Harzzufuhr steht.

Die EP 0 478 876 A1 betrifft eine Anordnung zum Füllen von Gießformen mit Gießharz und dergleichen.

Die US 5,545,029 betrifft eine Ausrüstung für das Füllen von einer oder mehrerer Gussformen, bei der ein elastisches Puffergefäß vorgesehen ist.

Im Rahmen der hier beschriebenen Erfindung werden nachfolgend unter dem Begriff Gießharz sowohl Gießharzkomponenten, wie beispielsweise Härterkomponenten und Harzkomponenten, als auch aus zumindest diesen beiden Komponenten hergestellte, reaktionsfähige Gießharzgemische verstanden.

Die Gießformen für derartige Faserverbundbauteile, wie z.B. Formen für Flügel von Windkraftanlagen, sind teilweise flexibel ausgeformt, d.h. sie bestehen beispielsweise aus einer formstabilen Halbschale, die durch Aufbringen einer Folie zu einer geschlossenen Form komplettiert wird. Durch Erzeugen eines Vakuums im Inneren der Gießform wird die Folie in die für den Verguss gewünschte Form gezogen, da die Folie von außen mit einem höheren Druck, insbesondere Atmosphärendruck, beaufschlagt ist. Dabei sorgt das Vakuum bzw. die Druckdifferenz zwischen der Form und dem Gießharz-Vorratsbehälter, der i.A. ebenso unter Atmosphärendruck steht, für die Füllung der Gießform, indem das Gemisch entlang des Druckgradienten fließt.

Ein großer Nachteil dieses Verfahrens besteht darin, dass der Atmosphärendruck direkt auf den Innebereich des Vorratsbehälters wirkt, so dass das reaktive Gemisch der umgebenden Luft ausgesetzt ist. Die mechanische Festigkeit der Faserverbundbauteile hängt jedoch entscheidend von der Qualität des Vergusses und der Qualität des verwendeten Materials ab. Insbesondere eingeschlossene Luftblasen vermindern jedoch die Festigkeit und Qualität des Bauteils signifikant. Gerade große Faserverbundbauteile, wie z.B. Flügel von Windkraftanlagen, müssen daher mit ausreichend entgasten Gießharzmaterialien vergossen werden, ohne dass es nach der Entgasung wieder zu einer Beimischung von Gas aus der Umgebungsluft kommt.

Zur Vermeidung dieses Problems wird in EP 1 996 389 B1 eine spezielle Ausbildung des Fasereinsatzes in der Form beschrieben, durch den Lufthohlräume verhindert werden sollen. Weiterhin schlägt WO 2008 010 198 A1 zur Vermeidung von Lufteinschlüssen vor, ein Polymerharz mit niedriger Viskosität zu verwenden. In WO 2010 018 229 A1 und DE 60 210 729 T2 sollen Lufteinschlüsse durch eine spezielle Steuerung der zugeführten Harzmenge verhindert werden. Darüber hinaus ist aus WO 2004 087 392 A2 das sogenannte Composite Pressure Resin Infusion System (COMPRIS) bekannt, mit dem ein Vergussprodukt erreicht werden soll, das besonders wenig Lufteinschlüsse aufweist.

Ein weiterer Nachteil der oben beschriebenen, batchweisen Aufbereitung des reaktiven Gemisches besteht darin, dass je nach Vergussvolumen eine mehr oder weniger geringe Überschussmenge an Gemisch produziert wird, welche nach dem Gießprozess entsorgt werden muss. Gerade bei großen Faserverbundbauteilen, wie z.B. Flügeln für Windkraftanlagen, wird das reaktive Gemisch zweckmäßigerweise an verschiedenen Punkten in die Gießform gegossen, um eine möglichst homogene Verteilung zu gewährleisten. Aufgrund der komplexen Gießform geschieht die Füllung jedoch i.A. nicht gleichmäßig, so dass auch dieser Umstand ein erhöhtes Gießharzvolumen bedingt, damit an allen Vergusspunkten ständig Vergussmaterial anliegt, weshalb nach Abschluss des Vergusses das im Überschuss produzierte Gemisch entsorgt werden muss.

Ein weiteres, beispielsweise aus DE 3522922 C2 bekanntes Verfahren zur Vermeidung von Gaseinschlüssen in der Gießharzmasse besteht darin, die entgasten Gießharzkomponenten mittels Dosiereinrichtungen in eine Mischeinheit zu befördern und das reaktive Gemisch von dort aus zu vergießen. Dabei ist das gesamte System vom Ort der Entgasung bis zum Ort des Vergusses zur Umgebung hin luftdicht abgeschlossen und steht darüber hinaus unter Vakuum, so dass vom entgasten Material nachträglich kein Gas aufgenommen werden kann.

Ein Nachteil derartiger Vorrichtung mit Dosiereinrichtungen besteht jedoch darin, dass es bei der Befüllung der zuvor beschriebenen, flexiblen Formen mitunter zu Verformungen des flexiblen Teils der Gießform, beispielsweise zu Verformungen der anliegenden Folie, kommt, so dass das fertig vergossene Produkt von der ursprünglich gewünschten Form abweicht und damit unbrauchbar wird.

Aufgabe der vorliegenden Erfindung ist es daher, die eingangs genannten Verfahren und Vorrichtungen zum Vergießen von Gießharz oder Gießharzkomponenten in wenigstens eine Form dahingehend zu verbessern, dass ein insbesondere hermetisch abgeschlossenes Vergießen von entgastem Gießharz in eine vorzugsweise teilweise flexible Form ermöglicht wird, ohne dass es zu einer nachträglichen Anreicherung von Gasen im Gießharz und zu einer Deformation der teilweise flexiblen Form kommt, und dass darüber hinaus ein unnötig großer Überschuss an reaktivem Gießharz vermieden wird.

Diese Aufgabe wird gelöst durch ein Verfahren gemäß Anspruch 1, sowie einer Vorrichtung zur Durchführung des Verfahrens zum Vergießen von Gießharz gemäß Anspruch 7. Vorteilhafte Ausgestaltungen der Erfindung sind Gegenstand der Unteransprüche.

Das hier beanspruchte Verfahren gemäß Anspruch 1 sowie die entsprechende Vorrichtung gemäß Anspruch 7 dienen zum Vergießen von Gießharz oder Gießharzkomponenten in wenigstens eine Form, insbesondere zum Vergießen nach dem eingangs zitierten VaRTM-Prinzip, wobei das Gießharz mittels wenigstens einer Zuführeinrichtung der wenigstens einen Form zugeführt wird und die wenigstens eine Zuführeinrichtung und/oder die wenigstens eine Form zumindest bereichsweise unter Vakuum stehen. Zur Vermeidung von Gaseinschlüssen in der Gießmasse ist es vorzugsweise vorgesehen, dass einerseits das Gießharz und/oder die Gießharzkomponenten vor dem Verfüllen, beispielsweise in einem Durchlaufentgaser oder einem Dünnschicht-Entgaser, entgast werden, und dass anderseits die zum Aufbereiten, Entgasen und Vergießen verwendete Vorrichtung mit der wenigstens einen Zuführeinrichtung vom Ort der Entgasung bis zum Ort des Vergießens, d.h. vorzugsweise auch die Form, zur Umgebung hin luftdicht, d.h. hermetisch, abgeschlossen ist und darüber hinaus zumindest in diesem Bereich vollständig unter Vakuum steht, so dass vom entgasten Material nachträglich kein Gas aufgenommen werden kann.

Das hier beschriebene, erfindungsgemäße Verfahren sowie die erfindungsgemäße Vorrichtung zeichnen sich dadurch aus, dass überschüssiges Gießharz und/oder Überdruck in wenigstens einem Vorratsbehälter aufgenommen wird bzw. aufnehmbar ist, wobei der Vorratsbehälter eine in zumindest zwei orthogonale Richtungen flexibel ausgebildete Wandung aufweist.

In erfindungsgemäßer Weise wurde erkannt, dass es beim Vergießen von zumindest teilweise flexiblen Formen nach den aus dem Stand der Technik bekannten Verfahren bzw. Vorrichtungen, insbesondere bei Verwendung der oben erwähnten Dosiereinrichtungen, häufig zu ungünstigen Druckverhältnissen innerhalb der Form kommen kann. Mitunter übersteigt der Druck in der Form den von außen auf dem flexiblen Teil der Form, also beispielsweise der anliegenden Folie, lastenden Druck, d.h. vornehmlich den Atmosphärendruck, was in der Folge zu den genannten Verformungen des flexiblen Teils der Gießform führt und somit das vergossene Produkt unbrauchbar macht.

Demgegenüber wird durch den erfindungsgemäßen Vorratsbehälter mit in zumindest zwei orthogonalen Richtungen flexibel ausgestalteter Wandung erreicht, dass überschüssiges Gießmaterial, das beispielsweise bei fast gefüllter Form durch Rückstauung entsteht, in den Vorratsbehälter aufgenommen wird, indem sich der Vorratsbehälter zumindest in die beiden genannten orthogonalen Richtungen entfaltet. Denkbar ist aber auch, dass die Wandung in drei orthogonale Richtungen flexibel ausgebildet ist.

Gleichzeitig sorgt die Aufnahme des überschüssigen Gießharzes dafür, dass sich in der wenigstens einen Form kein Überdruck, d.h. kein Druck größer dem Druck, insbesondere Atmosphärendruck, im Außenbereich der Form aufbauen kann, so dass eine Verformung der teilweise flexiblen Form vermieden wird. Gemäß der Erfindung ist es deswegen vorgesehen, dass der Druck im Innenbereich des Vorratsbehälters kleiner oder gleich dem Druck im Außenbereich der Form gehalten wird, so dass der Vorratsbehälter durch seine flexibel ausgebildete Wandung als Druckpuffer für die Form dient.

Da der Vorratsbehälter typischerweise vom gleichen Druck umgeben ist wie die Form, vornehmlich also von Atmosphärendruck, ist der Druck im Innenbereich des Vorratsbehälters vorzugsweise auch nicht größer dem Druck im Außenbereich des Vorratsbehälters. Unabhängig davon kann es bei einer vorteilhaften Ausgestaltung der Erfindung vorgesehen sein, dass der Druck im Innenbereich des wenigstens einen Vorratsbehälters während des Vergießens kleiner oder gleich dem Druck, insbesondere Atmosphärendruck, im Außenbereich des wenigstens einen Vorratsbehälters gehalten wird.

Gemäß der Erfindung ist die Wandung des Vorratsbehälters in den zumindest zwei orthogonalen Richtungen derart flexibel ausgestaltet, dass eine Druckdifferenz zwischen dem Innenbereich und dem Außenbereich des Vorratsbehälters über die Wandung vermittelbar ist. Vorzugsweise ist die Wandung derart flexibel ausgebildet, dass die Druckdifferenz nahe vollständig übertragbar ist. Denkbar ist aber auch, dass die Druckdifferenz aufgrund einer ggf. weniger flexibel ausgebildeten Wandung nur teilweise vermittelt wird.

Durch die flexibel ausgebildete Wandung wird nicht nur erreicht, dass sich der Beutel zur Aufnahme von überschüssigem Gießmaterial und/oder Überdruck volumenmäßig entfalten kann, sondern auch, dass der auf der von außen auf dem Vorratsbehälter lastende Druck, also insbesondere der atmosphärische Druck, aufgenommenes Gießharz aus dem Vorratsbehälter austrägt und beispielsweise in die Form fördert. Während des Vergießens wird hierzu der Druck im Innenbereich des Vorratsbehälters nicht nur kleiner oder gleich dem Druck im Außenbereich der Form, sondern vorzugsweise auch kleiner gleich dem Druck im Außenbereich des Vorratsbehälters gehalten.

Nach einer vorteilhaften Ausgestaltung der Erfindung ist es vorgesehen, dass der Vorratsbehälter wenigstens eine Öffnung zur Aufnahme und/oder Abgabe von Gießharz aufweist, über die der Vorratsbehälter vorzugsweise mit der Zuführeinrichtung verbunden ist. Denkbar ist aber auch, dass Gießharz über eine erste Öffnung in den Vorratsbehälter aufnehmbar und über eine zweite Öffnung entnehmbar ist.

Nach einer weiteren vorteilhaften Ausgestaltung der Erfindung ist der wenigstens eine Vorratsbehälter über eine Stichleitung mit der wenigstens einen Zuführeinrichtung verbunden. Auf dieser Weise kann insbesondere eine gemeinsame Öffnung für die Entnahme und Abgabe von Gießharz genutzt werden. Denkbar ist beispielsweise, dass eine Leitung der Zuführeinrichtung ein T-Stück aufweist oder eine sonstige Verteilereinrichtung aufweist, über die der Vorratsbehälter an die Zuführleitung zum Befüllen der Form angeschlossen ist.

Zudem kann es vorgesehen sein, dass der Vorratsbehälter gegenüber der Zuführeinrichtung und der Form über eine Absperreinrichtung, beispielsweise über ein Ventil, absperrbar ist.

Insbesondere ist vorgesehen, dass der Vorratsbehälter ebenso wie die Zuführeinrichtung und die Form luftdicht, d.h. hermetisch, gegenüber der Umgebung abgeschlossen ist, damit das vorzugsweise entgaste Gießmaterial nicht nachträglich wieder mit Gas angereichert wird. Außerdem ist der Vorratsbehälter vorzugsweise evakuierbar bzw. wird vor dem Vergießen vorzugsweise evakuiert.

Da die reaktionsfähige Gießharzmasse nach einer bestimmten Zeit ausgeliert, können verschiedene Teile der Gießvorrichtung nur zeitlich begrenzt genutzt werden und müssen vor einem erneuten Einsatz mitunter erst aufwändig gereinigt werden. Daher kann es aus Kostengründen von Vorteil sein, wenn der Vorratsbehälter als günstiger Einmal-Behälter ausgebildet ist, der nach dem Gebrauch entsorgt werden kann. Hierzu kann der Vorratsbehälter nach einer weiteren Ausgestaltung der Erfindung als Beutel ausgebildet sein. Neben der einfachen und kostengünstigen Herstellungsweise erlaubt ein flexibler Beutel darüber hinaus besonders gut die Vermittlung eines Druckgradienten zwischen dem Innen- und Außenbereich des Behälters.

Desweiteren ist es von Vorteil, wenn der Vorratsbehälter möglichst kleinvolumig ausgebildet ist, dennoch aber ausreichend Kapazität zur Aufnahme von überschüssigem Gießharz aufweist. Nach einer vorteilhaften Ausführung der Erfindung beträgt das Fassungsvolumen des Vorratsbehälters zwischen 0,5 l und 20 l, insbesondere zwischen 1 l und 10 l, vorzugsweise 5 l. Der Verzicht auf großvolumige Vorratsbehälter für reaktives Gemisch, wie z.B. bei der Batchaufbereitung, bewirkt, das die Gefahr des Ausgelierens der Reaktionsmasse im Vorratsbehälter durch Ausbildung einer Exotherme minimiert wird, da die entstehende Wärme bei kleinvolumigen Behältern deutlich effizienter abgeführt werden kann.

Insbesondere kann es weiterhin vorgesehen sein, dass die Wandung des Vorratsbehälters zumindest bereichsweise aus einer flexiblen Kunststofffolie, beispielsweise aus Polyvinylchlorid, Polyethylen oder Polyethylenterephthalat, besteht. Derartige Folienbeutel erlauben nicht nur einen hinreichend luftdichten Abschluss des Vorratsbehälters gegenüber der Umgebung, sondern sind zudem besonders günstig und technisch einfach herzustellen und eignen sich deshalb besonders gut als Einweg-Produkte.

Die Förderung von Gießharz aus dem Vorratsbehälter in die Form kann insbesondere dazu dienen, um Materiallücken bzw. -schwund in der Form durch Schrumpfprozesse während des Ausgelierens des Gießharzes zu kompensieren. Um den Materialtransport vom Vorratsbehälter in die Form zu ermöglichen bzw. zu begünstigen, ist es nach einer weiteren vorteilhaften Ausgestaltung der Erfindung vorgesehen, dass der Druck im Innenbereich des wenigstens einen Vorratsbehälters während des Vergießens größer oder gleich dem Druck in der wenigstens einen, zumindest bereichsweise unter Vakuum stehenden Form ist, jedoch nicht größer als der auf der Außenseite des flexiblen Teils der Form lastende Druck. Liegt nun zwischen dem Außenbereich und dem Innenbereich des Vorratsbehälters eine positive Druckdifferenz an, so wird diese über die flexible Wandung vermittelt und bewirkt die Abgabe von Gießharz aus dem Vorratsbehälter. Aufgrund des Druckgradienten zwischen der Form und Vorratsbehälter wird dann im Weiteren das Material in die Form gefördert.

Zur Erzeugung des Druckgradienten zwischen Vorratsbehälter und Form weist die Vorrichtung zum Vergießen gemäß einer weiteren vorteilhaften Ausführung der Erfindung eine Vakuumeinrichtung auf, mit der im Inneren der Form ein Unterdruck erzeugbar ist, der unterhalb des Drucks im Innenbereich des wenigstens einen Vorratsbehälters liegt.

Um einen Überdruck im Inneren der Form gegenüber dem auf deren Außenseite lastenden Druck zu vermeiden, kann es außerdem nach einer weiteren Ausführungsform der Erfindung vorgesehen sein, dass der wenigstens eine Vorratsbehälter auf einem Höhenniveau unterhalb der wenigstens einen Form angeordnet ist. Dadurch wird in vorteilhafter Weise verhindert, dass sich über der Form, insbesondere gegen Ende des Gießvorgangs, in der Zuführeinrichtung und dem Vorratsbehälter eine Säule aus gießfähigen Harzmaterial ausbilden kann, die Druck, insbesondere Überdruck, auf das Innere der Form ausüben würde und zu einer Deformation der flexiblen Form führen könnte.

Erfindungsgemäß ist es vorgesehen, dass der Füllstand des wenigstens einen Vorratsbehälters während des Vergießens gemessen, insbesondere gewogen, wird. Auf diese Weise kann insbesondere festgestellt werden, ob der Vorratsbehälter Gefahr läuft, überfüllt zu werden, wodurch sich u.U. nachteilig ein Innendruck größer dem Druck im Außenbereich der Form ergeben könnte.

Um dies zu vermeiden, ist es nach Ausführung der Erfindung vorgesehen, dass die Gießharzzufuhr über die wenigstens eine Zuführeinrichtung in Abhängigkeit des Füllstands des wenigstens einen Vorratsbehälters und/oder in Abhängigkeit der Abgaberate von Gießharz aus dem wenigstens einen Vorratsbehälter gesteuert wird, insbesondere dass die Gießharzzufuhr zum wenigstens einen Vorratsbehälter bzw. zu der wenigstens einen Form bei Überschreiten eines kritischen oberen Füllstands unterbrochen und bei Unterschreiten eines kritischen unteren Füllstands freigegeben wird.

So kann es mitunter vorgesehen sein, dass nach Aufnahme einer entsprechenden Überschussmenge im Vorratsbehälter, die z.B. durch Wägung des Vorratsbehälters ermittelbar ist, die Gießharzzufuhr in der wenigstens einen Zuführeinrichtung, beispielsweise durch Schließen eines Ventils, gestoppt wird. Wird nach einiger Zeit erneut Gießharz benötigt, so wird dieses so lange aus dem Vorratsbehälter zugeführt, bis dessen Inhalt einen Minimalstand erreicht hat und die Zufuhr aus der Mischeinheit, z.B. durch Öffnen eines Ventils, wieder aufgenommen wird.

Um die Form bei unterbrochener Zufuhr weiterhin mit Gießharz zu füllen, ist es nach einer weiteren Ausgestaltung der Erfindung vorgesehen, dass überschüssiges Gießharz aus dem wenigstens einen Vorratsbehälter in die wenigstens eine Form aufgrund der Druckdifferenz zwischen dem wenigstens einen Vorratsbehälter und der wenigstens einen Form gefördert wird.

Zur Steuerung und/oder Regelung der Gießharzzufuhr über die wenigstens eine Zuführeinrichtung kann deshalb bei einer weiteren vorteilhaften Ausgestaltung der Erfindung eine Steuereinrichtung vorgesehen sein.

Desweiteren kann die Gießvorrichtung hierzu in vorteilhafter Weise eine Messeinrichtung, insbesondere eine Wiegeeinrichtung, zum Messen des Füllstands des wenigstens einen Vorratsbehälters aufweisen, die vorzugsweise mit der Steuereinrichtung zur Steuerung und/oder Regelung der Gießharzzufuhr verbunden ist. Denkbar ist insbesondere ein vollautomatisierter Betrieb der gesamten Gießvorrichtung.

Das Gießharz wird nach einer weiteren vorteilhaften Ausführung der Erfindung aus mindestens zwei Gießharzkomponenten, beispielweise aus einem Härter und einer Harzkomponenten, zu einem reaktionsfähigen Gemisch zusammengemischt, wobei die Gießharzkomponenten und/oder das Gemisch vorzugsweise entgast sind. Die Mischung kann beispielsweise in einer Mischereinheit erfolgen, die vor, insbesondere unmittelbar vor, der wenigstens einen Zuführeinrichtung bzw. dem wenigstens einen Vorratsbehälter angeordnet ist. Dadurch lässt sich insbesondere eine kontinuierlich mischende Gießharzanlage realisieren, bei der die mindestens zwei Gießharzkomponenten erst kurz vor dem Verguss zusammengeführt und anschließend sofort in die Gießform eingebracht werden. Die entgasten Gießharzkomponenten stehen somit bis unmittelbar vor dem Verguss in ihrer Anfangsviskosität zur Verfügung. Dies bewirkt eine sehr effektive Ausnutzung des benötigten Materials, da jeweils nur so viel Gemisch erzeugt wird, wie benötigt wird.

Neben der Entgasung der Gießharzkomponenten und der anschließenden Mischung ist es auch möglich, die Komponenten direkt miteinander zu mischen und dieses reaktive Gemisch dann vor dem Verguss zu entgasen oder Entgasung und Mischung gleichzeitig durchzuführen, z.B. in einem sogenannten Durchlaufentgasungsmischer.

Weiterhin kann der Mischer, ebenso wie der Vorratsbehälter und/oder die Zuführeinrichtung, als kostengünstige Einweg-Einrichtung ausgebildet sein, die nach einmaligem Einsatz oder nur einer geringen Zahl von Einsätzen durch eine neue ersetzt wird.

Selbstverständlich ist es bei entsprechender Temperaturführung möglich, die Vorratsbehälter und Mischeinheiten für mehr als einen Vergussprozess zu verwenden. Eine vorteilhafte Temperaturführung bzw. Temperatursteuerung oder -regelung sieht z.B. die Kühlung des Vorratsbehälters vor, um dort die Reaktion des Gemisches zu verlangsamen bzw. zu unterbinden und somit ein eventuelles Aushärten im Vorratsbehälter zu vermeiden. Weiterhin kann das reaktive Gemisch, das der Gießform zugeführt wird, z.B. vor Eintritt in die Gießform, über einen Wärmetauscher geführt werden, um auf diese Weise die Temperatur des Gemisches anzuheben. Nach einer weiteren vorteilhaften Ausgestaltung der Erfindung kann also wenigstens eine Temperatursteuereinrichtung, insbesondere ein Wärmetauscher, zur Steuerung und/oder Regelung der Temperatur des Gießharzes in dem wenigstens einen Vorratsbehälter und/oder in der wenigstens einen Zuführeinrichtung, insbesondere vor den Füllöffnungen der wenigstens einen Form, vorgesehen sein.

Vor allem bei sehr großen, zu vergießenden Bauteilen, wie beispielswiese Flügeln von Windkraftanalgen, ist es von besonderem Vorteil, insbesondere für die spätere Qualität und Stabilität des Bauteils, wenn dieses in einem sehr gleichmäßigen Gießprozess erzeugt wird. Hierzu ist es nach einer weiteren vorteilhaften Ausgestaltung möglich, dass mehrere, parallel geschaltete Zuführeinrichtungen mit je wenigstens einem Vorratsbehälter und vorzugsweise je einer vorgeschalteten Mischereinheit vorgesehen sind, über die die wenigstens eine Form gefüllt wird. Hierzu ist vorzugsweise jeder der Zuführeinrichtungen wenigstens eine Füllöffnungen der wenigstens einen Form zugeordnet. Denkbar ist aber auch, dass nur ein Mischer vorgesehen ist, von dem mehrere Zuführeinrichtungen abzweigen.

Weiterhin ist denkbar, dass jede dieser Einheiten aus Zuführeinrichtung, Vorratsbehälter und ggf. vorgeschalteter Mischereinheit separat steuerbar ist, so dass der Gießprozess lokal beeinflussbar ist, d.h. insbesondere lokal gestoppt werden kann, wenn beispielsweise die Form im Füllbereich einer bestimmten Zuführeinrichtung bereits ausgefüllt ist.

Um ein möglichst gleichmäßiges Vergießen zur ermöglichen, aber dennoch die Anzahl an Zuführeinrichtung und damit den technischen Aufwand so gering wie möglich zu halten, kann die wenigstens eine Form in vorteilhafter Weise über mehrere, einer Zuführeinrichtung zugeordnete Füllöffnungen gefüllt werden.

Nach einer weiteren vorteilhaften Ausgestaltung der Erfindung sind die verschiedenen Zuführeinrichtungen über Ringleitungen und/oder Umwälzleitungen miteinander und mit den Entgasungseinrichtungen bzw. den Vorratskammern für die Gießharzkomponenten verbunden. Dadurch wird einerseits erreicht, dass die jeweiligen Einheiten zentral, d.h. aus einer Quelle mit den entgasten Gießharzkomponenten versorgt werden, und anderseits, dass die Komponenten, insbesondere bei geschlossenen Vergussventilen, in die Entgasungseinrichtungen zurückgeführt und dadurch umgewälzt werden, wodurch die Entgasungsqualität gesichert wird.

Durch den Einsatz von kleinvolumigen Vorratsbehältern in Kombination mit der Bereitstellung einer erst unmittelbar vor dem Vergießen erzeugten reaktiven Gießmasse sowie dem lokal steuer- bzw. regelbaren Vergießen über mehrere parallel geschaltete Zuführeinrichtungen kann insgesamt eine sehr effektive Ausnutzung des benötigten Materials erreicht werden, da jeweils nur so viel Gemisch erzeugt wird, wie benötigt wird.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnung.

Es zeigen:
- Fig. 1: eine schematische Darstellung eines ersten Ausführungsbeispiels einer erfindungsgemäßen Vorrichtung (10) zum Vergießen von Gießharz oder Gießharzkomponenten,
- Fig. 2: eine schematische Darstellung eines zweiten Ausführungsbeispiels einer erfindungsgemäßen Vorrichtung (10) zum Vergießen von Gießharz oder Gießharzkomponenten und
- Fig. 3: eine schematische Darstellung eines dritten Ausführungsbeispiels einer erfindungsgemäßen Vorrichtung (10) zum Vergießen von Gießharz oder Gießharzkomponenten.

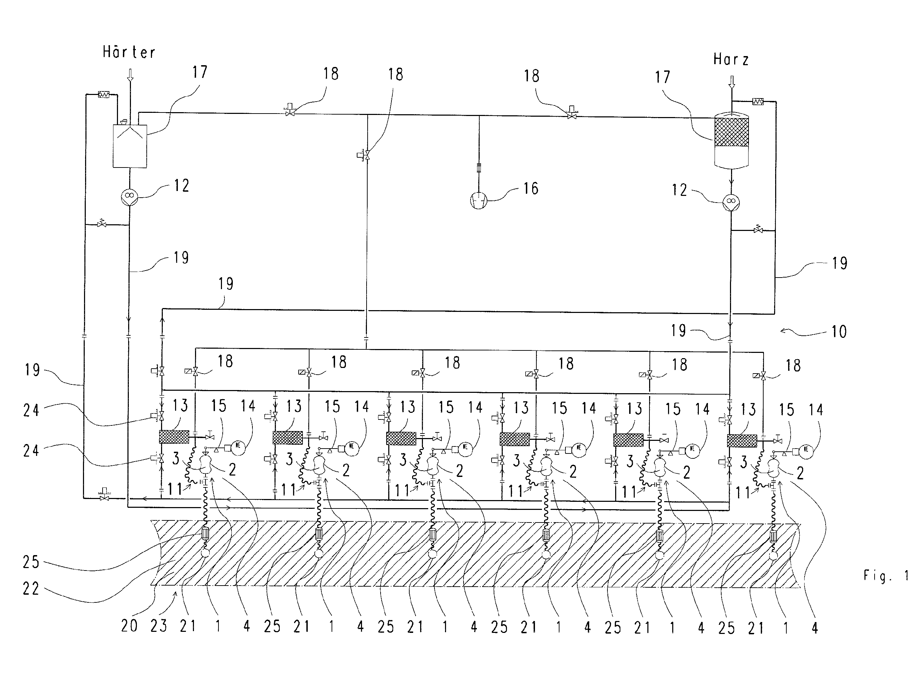

Die Figuren 1 bis 3 zeigen in schematischer Darstellung drei verschiedene Ausführungsbeispiele der erfindungsgemäßen Vorrichtung (10) zum Vergießen von Gießharz oder Gießharzkomponenten in eine Gießform (20), insbesondere einer Vorrichtung (10) zur Durchführung des erfindungsgemäßen Verfahrens. Derartige Vorrichtungen (10) kommen insbesondere bei der Imprägnierung von großen Bauelementen, insbesondere von Faserverbundbauteilen, wie beispielsweise Flügeln von Windkraftanlage, zum Einsatz, wobei der Verguss in eine zumindest teilweise flexible Form (20) erfolgt. So kann die in den vorliegenden Ausführungsbeispielen nur schematisch dargestellte Gießform (20) beispielsweise aus einer Halbschale bestehen, die durch Aufbringen einer Folie geschlossen wird. Durch Erzeugen eines Vakuums in Inneren (22) der Gießform (20) wird die Folie in die für den Verguss gewünschte Form gezogen, da die Folie von außen mit einem höheren Druck, insbesondere Atmosphärendruck beaufschlagt ist.

Die hier gezeigten Ausführungsbeispiele der Gießvorrichtung (10) arbeiten wie folgt: Die zur Erzeugung des reaktiven Gießharzes benötigen Komponenten, hier eine Harzkomponente sowie eine Härterkomponente, werden in separaten großvolumigen Entgasungseinrichtung (17), z.B. einem Dünnschichtentgaser, bevorratet und von etwaigen Gasrückständen, beispielsweise Lufteinschlüssen, befreit. Dabei ist die gesamte Vorrichtung (10) vom Ort der Entgasung bis zum Ort des Vergusses zur Umgebung hin luftdicht abgeschlossen und steht darüber hinaus unter Vakuum, so dass vom entgasten Material nachträglich kein Gas aufgenommen werden kann. Ein Einströmen von Gas aus der Umgebung ist während und auch am Ende des Vergussprozesses nicht möglich. Zur Erzeugung des Vakuums ist eine Vakuumpumpeinrichtung (16) vorgesehen, die über entsprechende Leitungen mit den einzelnen Bereichen der Vorrichtung, d.h. der Gießharzanlage, in Verbindung steht und bei Bedarf über Vakuumventile (18) abgesperrt werden kann.

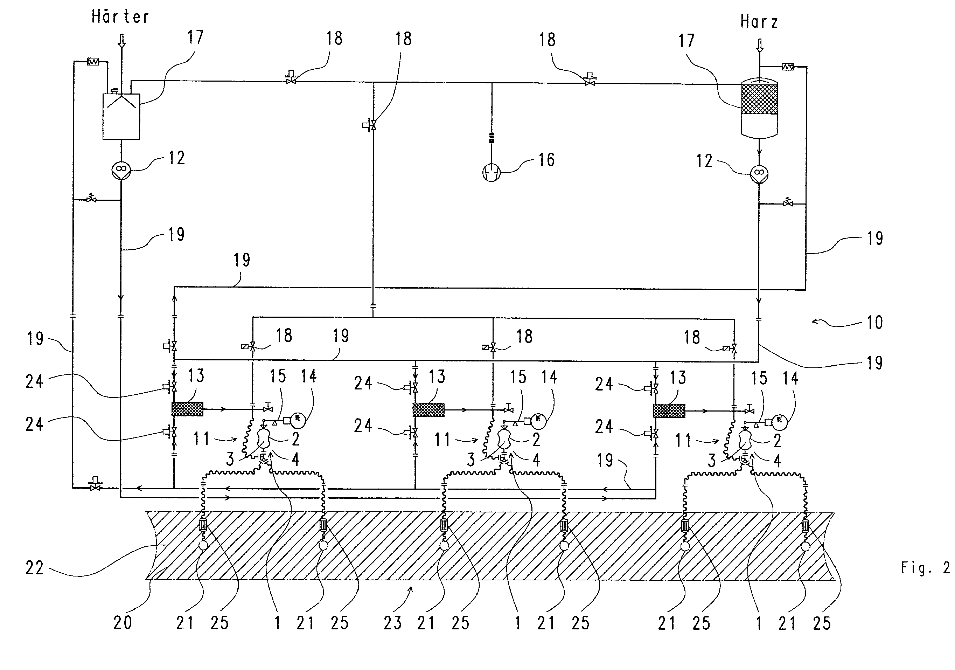

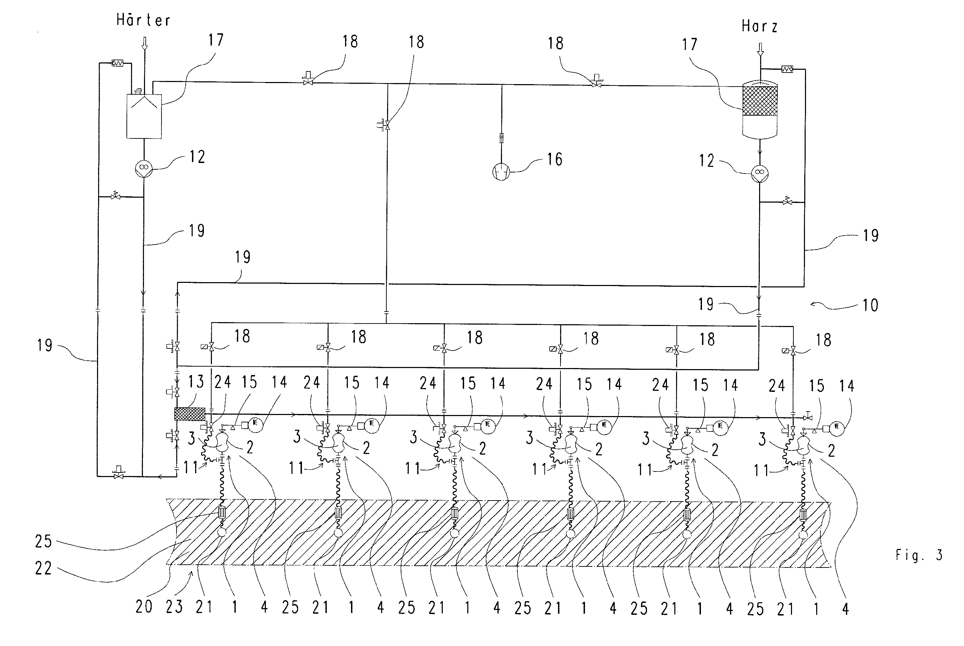

Mittels Dosierpumpeinrichtungen (12), z.B. gesteuerten Zahnradpumpen, werden die entgasten Komponenten durch separate, sich verzweigende Ringleitungen (19) geführt und jeweils kurzfristig vor dem eigentlichen Gießvorgang in Mischereinheiten (13), beispielsweise Durchlaufmischern bzw. Statikmischern, zu einem reaktionsfähigen Gießharzgemisch vermischt. Die Mischung der Komponenten kann entweder, wie bei den in Fig. 1 und Fig. 2 gezeigten Ausführungsbeispielen, in mehreren parallel geschalteten Mischereinheiten, oder wie bei dem in Fig. 3 gezeigten Ausführungsbeispiel, in einer einzigen, gemeinsamen Mischereinheit (13) erfolgen. Bei der letztgenannten Ausführungsvariante reduziert sich in vorteilhafter Weise der technische Aufwand für die Zusammenführung der Komponenten. Nach dem Zusammenführen der Gießharzkomponenten wird das fertige Gemisch über mehrere, den jeweiligen Mischereinheiten (13) bzw. der einen Mischereinheit (13) nachgeschalte Zuführeinrichtungen (11) und entsprechende Füllöffnungen (21) in die Form (20) verfüllt. Die Zuführeinrichtung kann hierbei beispielsweise aus einer einfachen, flexiblen Schlauchleitung bestehen.

An jeder der Zuführeinrichtungen (11) ist erfindungsgemäß wenigstens ein Vorratsbehälter (1) angeordnet, der in den vorliegenden Ausführungsbeispielen über eine entsprechende Öffnung und ein T-Stück bzw. eine sonstige Verteilereinrichtung mit der Zuführeinrichtung (11) verbunden ist, so dass im Überschuss eingebrachtes Gießharz darin aufgenommen werden kann.

Um ein möglichst gleichmäßig vergossenes Bauteil zu erhalten, ist es von Vorteil, wenn die Form (20), wie bei den in Fig. 1 und Fig. 3 gezeigten Ausführungsbeispielen, über mehrere, hier sechs, parallel geschaltete Zuführeinrichtungen (11) mit je wenigstens einem Vorratsbehälter (1) und einem gemeinsamen bzw. je einer separaten vorgeschalteten Mischereinheit (13) gefüllt wird. Dabei ist jeder der Zuführeinrichtungen (11) eine Füllöffnung (21) der Form (20) zugeordnet. Um die Anzahl an Zuführeinrichtungen (11), Mischereinheiten (13) und Vorratsbehältern (1) und damit den technischen Aufwand zu reduzieren, kann es, wie in dem in Fig. 2 gezeigten Ausführungsbeispiel dargestellt, selbstverständlich auch vorgesehen sein, dass mehrere, hier zwei, Füllöffnungen (21) je einer Zuführeinrichtung (11) zugeordnet sind.

Damit im Überschuss eingebrachtes Gießharz in den Vorratsbehältern (1) aufgenommen werden kann, ist die Wandung (2) jedes Vorratsbehälters (1) gemäß der Erfindung in zumindest zwei orthogonalen Richtungen derart flexibel ausgebildet, dass eine Druckdifferenz zwischen dem Innenbereich (3) und dem Außenbereich (4) des Vorratsbehälters (1) über die Wandung (2) vermittelbar ist. Vorzugsweise ist der Vorratsbehälter hierzu als Einweg-Beutel ausgebildet, der insbesondere aus einer Kunststofffolie, z.B. aus Polyvinylchlorid, Polyethylen oder Polyethylenterephthalat, besteht.

Im vorliegenden Ausführungsbeispiel ist jeder der Vorratsbehälter (1) in seinem Außenbereich (4), ebenso wie die Außenseite (23) der Form (20), dem Atmosphärendruck ausgesetzt. Demgegenüber wird der Druck im Innenbereich (3) des Vorratsbehälters (1) während des Vergießen stets kleiner oder gleich dem Druck in den Außenbereichen (4, 23) der Form (20) bzw. der Vorratsbehälter (1) gehalten. Dadurch wird erreicht, dass in der Form (20) kein Überdruck, d.h. kein Druck größer dem Atmosphärendruck oder ggf. einem einstellbaren Unterdruck, aufgebaut wird, der sonst zu einer Verformung der vorzugsweise teilweise flexiblen Form (20) führen könnte.

Weiterhin besteht zwischen dem Innenbereich (4) eines jeden Vorratsbehälters (1) und dem Innenbereich (22) der Form (20) vorzugsweise eine positive Druckdifferenz, d.h. der Druck im Behälter (1) ist größer als in der Form (20), so dass bei Bedarf überschüssiges Gießharz aus den Vorratsbehältern (1) in die wenigstens eine Form (20) gefördert werden kann. Dieser Druckgradient kann beispielsweise durch eine, hier nicht dargestellte Vakuumeinrichtung, die an der Form (20) angeschlossen ist, erreicht werden. Bei der Durch vorzugsweisen Durchführung des VaRTM-Verfahrens ist eine derartige Vakuumeinrichtung ohnehin vorgesehen, die zum einen bewirkt, dass die Folie an den starren Teil der Form (20) gezogen wird und außerdem für die Füllung der Gießform sorgt, indem das Harzgemisch entlang des Druckgradienten zwischen Zuführung (11) und Form (20) fließt.

Weiterhin weisen die in Figuren 1 bis 3 gezeigten Ausführungsbeispiele an jedem Vorratsbehälter (1) Messeinrichtungen (15), insbesondere Wiegeeinrichtungen, zum Messen des Füllstands der jeweiligen Vorratsbehälter (1) auf, die mit einer entsprechenden Steuereinrichtung (14) zur Steuerung und/oder Regelung der Gießharzzufuhr verbunden sind. Auf diese Weise wird ermöglicht, dass die Gießharzzufuhr über die Zuführeinrichtung (11) in Abhängigkeit des Füllstands des eines Vorratsbehälters (1) und/oder in Abhängigkeit der Abgaberate von Gießharz aus dem Vorratsbehälter (1), vorzugsweise lokal, gesteuert werden kann, insbesondere dass die Gießharzzufuhr zum Vorratsbehälter (1) bzw. zur Form (20) bei Überschreiten eines kritischen oberen Füllstands im Vorratsbehälter unterbrochen und bei Unterschreiten eines kritischen unteren Füllstands im Vorratsbehälter freigegeben wird. Zum Unterbrechen der Materialzufuhr können vorzugsweise Vergussventile (24) zum Einsatz kommen, die beispielsweise - wie bei den in Fig. 1 und Fig. 2 gezeigten Ausführungsbeispielen -jeweils in den Komponentenleitungen (19) unmittelbar vor den einzelnen Mischereinheiten (13), oder - wie bei dem in Fig. 3 gezeigten Ausführungsbeispielen - nach der Mischereinheit (13) jeweils vor den Zuführeinrichtungen (11) angeordnet sein können.

Die Vorratsbehälter (1) dienen somit nicht nur als Pufferspeicher für reaktives Vergussmaterial und als Ausgleichsbehälter zum Abbau von Überdruck, sondern auch als Schalter für die insbesondere lokale Steuerung des Vergussprozesses, indem das Material im Vorratsbehälter wie im vorliegenden Ausführungsbeispiel beispielsweise gewogen wird. Denkbar sind aber auch andere Messverfahren und -einrichtungen zur Bestimmung des Füllstandes der Vorratsbehälter (1). So kann es u.a. vorgesehen sein, dass bei Aufnahme einer entsprechenden Überschussmenge in einem bestimmten Vorratsbehälter (1) die Gießharzzufuhr, z.B. durch Schließen der Vergussventile (24), insbesondere unabhängig vom laufenden Füllprozess an anderen Zuführeinrichtungen (11) lokal gestoppt wird. Wird nach einiger Zeit erneut Gemisch benötigt, so wird dieses so lange aus dem Vorratsbehälter (1) zugeführt, bis dessen Inhalt einen Minimalstand erreicht hat und die Zufuhr aus der Mischeinheit (13), z.B. durch Öffnen der Ventile (24), wieder aufgenommen wird. Nach Abschluss des Vergusses sorgt der atmosphärische Druck auf den Vorratsbehältern (1) abschließend für eine Schrumpfungskompensation während des Ausgelierens der Gießharzmasse in der Gießform (20), indem zusätzlich benötigtes Material nachgeliefert wird. Insgesamt kann also der Gießprozess insbesondere lokal gesteuert werden.

Bei sehr großen Bauteilen kann es vorgesehen sein, dass die Form (20) abschnittsweise vergossen wird. Hierzu ist die Gießvorrichtung (10) vorzugsweise mobil aufgebaut, d.h. sie kann nach dem Vergießen eines bestimmten Formabschnitts zu einem nächsten Abschnitt verlegt werden.

Die jeweiligen Einheiten aus Zuführeinrichtung (11), Mischereinheit (13) und Vorratsbehälter (1) sind in den beiden gezeigten Ausführungsbeispielen gemäß Fig.1 und Fig. 2 über Ring- bzw. Umwälzleitungen (19) miteinander bzw. mit den Entgasungseinrichtungen (17) für die Gießharzkomponenten verbunden. Bei dem in Fig. 3 gezeigten Ausführungsbeispiel sind nur die jeweiligen Komponenten-Zuführleitungen vor der einen Mischereinheit (13) über Umwälzleitungen (19) mit den Entgasungseinrichtungen (17) verbunden. In allen Ausführungsbeispielen wird dadurch erreicht, dass die jeweiligen Einheiten einerseits zentral, d.h. aus einer Quelle mit den entgasten Gießharzkomponenten versorgt werden, und anderseits, dass die Komponenten, insbesondere bei unterbrochenem Füllprozess, in die Entgasungseinrichtungen (17) zurückgeführt und dadurch umgewälzt werden, wodurch die Entgasungsqualität gesichert wird.

Vorzugsweise sind die Vorratsbehälter (1) und/oder die Zuführeinrichtung (11) und/oder die Mischereinheiten (13) als kostengünstige Einweg-Einrichtung ausgebildet, die nach einmaligen oder nur einer geringen Zahl von Einsätzen durch neue ersetzt werden.

Selbstverständlich ist es bei entsprechender Temperaturführung möglich, die Vorratsbehälter (1), Zuführeinrichtungen (11) und Mischeinheiten (13) für mehr als einen Vergussprozess zu verwenden. Eine vorteilhafte Temperaturführung bzw. Temperatursteuerung oder -regelung sieht z.B. die Kühlung des Vorratsbehälters vor, um dort die Reaktion des Gemisches zu verlangsamen bzw. zu unterbinden und ein eventuelles Aushärten im Vorratsbehälter zu vermeiden. Weiterhin kann das reaktive Gemisch, das der Gießform zugeführt wird, z.B. vor Eintritt in die Gießform über eine Temperatursteuereinrichtung, beispielsweise einen Wärmetauscher (25) geführt werden, um auf diese Weise die Temperatur des Gemisches anzuheben.

### Bezugszeichenliste

- 1: Vorratsbehälter
- 2: Wandung des Vorratsbehälters
- 3: Innenbereich des Vorratsbehälters
- 4: Außenbereich des Vorratsbehälters
- 10: Vorrichtung zum Vergießen von Gießharz oder Gießharzkomponenten
- 11: Zuführeinrichtung
- 12: Dosierpumpeinrichtung
- 13: Mischereinheit
- 14: Steuereinrichtung
- 15: Messeinrichtung
- 16: Vakuumpumpeinrichtung
- 17: Entgasungseinrichtung
- 18: Vakuumventil
- 19: Ringleitung
- 20: Form, insbesondere zumindest teilweise flexible Form
- 21: Füllöffnung der Form
- 22: Innenbereich der Form
- 23: Außenbereich der Form
- 24: Vergussventil
- 25: Wärmetauscher

## Patentansprüche

1. Verfahren zum Vergießen von Gießharz oder Gießharzkomponenten in wenigstens eine Form (20), wobei das Gießharz mittels wenigstens einer Zuführeinrichtung (11) der wenigstens einen Form (20) zugeführt wird und wobei die wenigstens eine Zuführeinrichtung (11) und/oder die wenigstens eine Form (20) zumindest bereichsweise unter Vakuum stehen, wobei überschüssiges Gießharz und/oder Überdruck in wenigstens einem Vorratsbehälter (1) mit in zumindest zwei orthogonalen Richtungen flexibel ausgebildeter Wandung (2) aufgenommen wird, wobei der Druck im Innenbereich (3) des wenigstens einen Vorratsbehälters (1) während des Vergießens zumindest kleiner oder gleich dem Druck, insbesondere Atmosphärendruck, im Außenbereich (23) der wenigstens einen Form (20) gehalten wird, wobei das Gießharz aus mindestens zwei Gießharzkomponenten, vorzugsweise mit einer Mischereinheit (13), vor, insbesondere unmittelbar vor, der wenigstens einen Zuführeinrichtung (11) bzw. dem wenigstens einen Vorratsbehälter (1) zu einem reaktionsfähigen Gemisch gemischt wird. **dadurch gekennzeichnet, dass** der Füllstand des wenigstens einen Vorratsbehälters (1) während des Vergießens gemessen, insbesondere gewogen, wird und dass die Gießharzzufuhr über die wenigstens eine Zuführeinrichtung (11) in Abhängigkeit des Füllstandes des wenigstens einen Vorratsbehälters (1) und/oder in Abhängigkeit der Abgaberate von Gießharz aus dem wenigstens einen Vorratsbehälter (1) gesteuert wird, dass die Gießharzzufuhr zum wenigstens einen Vorratsbehälter (1) bzw. der wenigstens einen Form (20) bei Überschreiten eines kritischen oberen Füllstands unterbrochen und bei Unterschreiten eines kritischen unteren Füllstands freigegeben wird.

2. Verfahren nach Anspruch 1, **dadurch gekennzeichnet, dass** der Druck im Innenbereich (3) des wenigstens einen Vorratsbehälters (1) während des Vergießens kleiner oder gleich dem Druck, insbesondere Atmosphärendruck, im Außenbereich (4) des wenigstens einen Vorratsbehälters (1) gehalten wird und/oder dass der Druck im Innenbereich (3) des wenigstens einen Vorratsbehälters (1) während des Vergießens größer oder gleich dem Druck in der wenigstens einen, zumindest bereichsweise unter Vakuum stehenden Form (1) gehalten wird.

3. Verfahren nach Anspruch 1 oder 2, **dadurch gekennzeichnet, dass** aufgrund der Druckdifferenz zwischen dem wenigstens einen Vorratsbehälter (1) und der wenigstens einen Form (20) bei unterbrochener Zufuhr überschüssiges Gießharz aus dem wenigstens einen Vorratsbehälter (1) in die wenigstens eine Form (20) gefördert wird.

4. Verfahren nach Anspruch 1, 2 oder 3, **dadurch gekennzeichnet, dass** die wenigstens eine Form (20) über mehrere, parallel geschaltete Zuführeinrichtungen (11) mit je wenigstens einem Vorratsbehälter (1) und vorzugsweise je einer vorgeschalteten Mischereinheit (13) gefüllt wird.

5. Verfahren nach einem der Ansprüche 1 bis 4, **dadurch gekennzeichnet, dass** die wenigstens eine Form (20) über mehrere, einer Zuführeinrichtung (11) zugeordnete Füllöffnungen (21) gefüllt wird.

6. Verfahren nach einem der Ansprüche 1 bis 5, **dadurch gekennzeichnet, dass** die Temperatur des Gießharzes in dem wenigstens einen Vorratsbehälter (1) und/oder vor dem Eintritt in die wenigstens eine Form (20), insbesondere über Wärmetauscher (25), gesteuert und/oder geregelt wird.

7. Vorrichtung (10) zum Vergießen von Gießharz oder Gießharzkomponenten in wenigstens eine Form (20) mit wenigstens einer Zuführeinrichtung (11) sowie mit wenigstens einem Vorratsbehälter (1), wobei die Wandung (2) des Vorratsbehälters (1) zur Aufnahme von überschüssigem Gießharz und/oder Überdruck in zumindest zwei orthogonalen Richtungen flexibel ausgebildet ist, derart, dass eine Druckdifferenz zwischen dem Innenbereich (3) und dem Außenbereich (4) des Vorratsbehälters (1) über die Wandung (2) vermittelbar ist, zur Durchführung eines Verfahrens nach einem der Ansprüche 1 bis 6.

8. Vorrichtung zum Vergießen von Gießharz oder Gießharzkomponenten nach Anspruch 7, **dadurch gekennzeichnet, dass** wenigstens eine Öffnung des Vorratsbehälters zur Aufnahme und/oder Abgabe von Gießharz vorgesehen ist.

9. Vorrichtung zum Vergießen von Gießharz oder Gießharzkomponenten nach Anspruch 7 oder 8, **dadurch gekennzeichnet, dass** der Vorratsbehälter (1) zumindest bereichsweise als Beutel ausgebildet ist.

10. Vorrichtung zum Vergießen von Gießharz oder Gießharzkomponenten nach einem der Ansprüche 7 bis 9, **dadurch gekennzeichnet, dass** die Wandung (2) des Vorratsbehälters (1) zumindest bereichsweise aus einer flexiblen Kunststofffolie, beispielsweise aus Polyvinylchlorid, Polyethylen oder Polyethylenterephthalat, besteht.

11. Vorrichtung (10) nach einem der Ansprüche 7 bis 10, **dadurch gekennzeichnet, dass** die Vorrichtung (10) und/oder die wenigstens eine Zuführeinrichtung (11) und/oder der wenigstens eine Vorratsbehälter (1) zumindest bereichsweise unter Vakuum stehen.

12. Vorrichtung (10) nach einem der Ansprüche 7 bis 11, **dadurch gekennzeichnet, dass** der wenigstens eine Vorratsbehälter (1), vorzugsweise über eine Stichleitung, mit der wenigstens einen Zuführeinrichtung (11) verbunden ist und/oder dass der wenigstens eine Vorratsbehälter (1) auf einem Höhenniveau unterhalb der wenigstens einen Form (20) angeordnet ist.

13. Vorrichtung (10) nach einem der Ansprüche 7 bis 12, **dadurch gekennzeichnet, dass** eine Vakuumeinrichtung vorgesehen ist, mit der im Inneren (22) der wenigstens einen Form (20) ein Unterdruck erzeugbar ist, der unterhalb des Drucks im Innenbereich (3) des wenigstens einen Vorratsbehälters (1) liegt.

14. Vorrichtung (10) nach einem der Ansprüche 7 bis 13, **dadurch gekennzeichnet, dass** mehrere, parallel geschaltete Zuführeinrichtungen (11) mit je einem Vorratsbehälter (1) und vorzugsweise je einer vorgeschalteten Mischereinheit (13) vorgesehen sind.

15. Vorrichtung (10) nach Anspruch 14, **dadurch gekennzeichnet, dass** jeder der Zuführeinrichtungen (11) wenigstens eine, insbesondere mehrere Füllöffnungen (21) der wenigstens einen Form (20) zugeordnet ist bzw. sind.

16. Vorrichtung (10) nach einem der Ansprüche 7 bis 15, **dadurch gekennzeichnet, dass** eine Steuereinrichtung (14) zur Steuerung und/oder Regelung der Gießharzzufuhr über die wenigstens eine Zuführeinrichtung (11) vorgesehen ist.

17. Vorrichtung (10) nach Anspruch 16, **dadurch gekennzeichnet, dass** eine Messeinrichtung (15), insbesondere eine Wiegeeinrichtung, zum Messen des Füllstands des wenigstens einen Vorratsbehälters (1) vorgesehen ist, die vorzugsweise mit der Steuereinrichtung (14) zur Steuerung und/oder Regelung der Gießharzzufuhr verbunden ist.

18. Vorrichtung (10) nach einem der Ansprüche 7 bis 17, **dadurch gekennzeichnet, dass** wenigstens eine Temperatursteuereinrichtung, insbesondere ein Wärmetauscher (25), zur Steuerung und/oder Regelung der Temperatur des Gießharzes in dem wenigstens einen Vorratsbehälter (1) und/oder in der wenigstens einen Zuführeinrichtung (11), insbesondere vor den Füllöffnungen (21) der wenigstens einen Form (20), vorgesehen ist.

## Claims

1. Method for casting cast resin or cast resin components into at least one mold (20), wherein the cast resin is supplied to the at least one mold (20) by means of at least one feeder device (11), and wherein the at least one feeder device (11) and/or the at least one mold (20) are under a vacuum at least in certain areas, wherein excess cast resin and/or excess pressure is received in at least one storage container (1) which has walls (2) that are formed in a flexible manner in at least two orthogonal directions, wherein during the casting procedure the pressure in the interior area (3) of the at least one storage container (1) is maintained at a level that is lower or equal to the pressure, in particular the atmospheric pressure, in the exterior area (23) of the at least one mold (20), wherein the cast resin is mixed from at least two cast resin components into a reactive composite, which is preferably performed by means of a mixing unit (13) upstream, in particular immediately upstream, of the at least one feeder device (11) or the at least one storage container (1),
**characterized in that** the filling level of the at least one storage container (1) is measured, in particular weighed, during the casting, and **in that** the cast resin supply via the at least one feeder device (11) is controlled depending on the filling level of the at least one storage container (1), and/or depending on the rate of discharge of cast resin from the at least one storage container (1), [and] that the cast resin supply to the at least one storage container (1) or the at least one mold (20) is interrupted when a critical upper filling level is exceeded and is enabled when a critical lower filling level fallen below.

2. Method according to claim 1, **characterized in that** during the casting procedure the pressure in the interior area (3) of the at least one storage container (1) is maintained at a level that is lower or equal to the pressure, in particular the atmospheric pressure, in the exterior area (4) of the at least one storage container (1), and/or that during the casting procedure the pressure in the interior area (3) of the at least one storage container (1) is maintained at a level that is higher or equal to the pressure in the at least one mold (1), which is under a vacuum at least in certain areas.

3. Method according to claim 1 or 2, **characterized in that** due to the pressure difference between the at least one storage container (1) and the at least one mold (20) excess cast resin is conveyed from the at least one storage container (1) into the at least one mold (20) when the supply is interrupted.

4. Method according to claim 1, 2 or 3, **characterized in that** the at least one mold (20) is filled via multiple feeder devices (11) that are connected in parallel and respectively have at least one storage container (1) and preferably respectively one upstream mixing unit (13).

5. Method according to one of the claims 1 to 4, **characterized in that** the at least one mold (20) is filled via multiple filler openings (21) that are assigned to a feeder device (11).

6. Method according to one of the claims 1 to 5, **characterized in that** the temperature of the cast resin), in the at least one storage container (1) and/or before it enters the at least one mold (20, is controlled and/or regulated, in particular via a heat exchanger (25).

7. Device (10) for casting cast resin or cast resin components into at least one mold (20) with at least one feeder device (11) as well as with at least one storage container (1), wherein the wall (2) of the storage container (1) is designed so as to be flexible in at least two orthogonal directions for the receiving of excess cast resin and/or excess pressure, namely in such a manner that a pressure difference between the interior area (3) and the exterior area (4) of the storage container (1) can be mediated by the wall (2), so as to perform a method according to one of the claims 1 to 6.

8. Device for casting cast resin or cast resin components according to claim 7, **characterized in that** at least one opening of the storage container is provided for receiving and/or discharging cast resin.

9. Device for casting cast resin or cast resin components according to claim 7 or 8, **characterized in that** the storage container (1) is formed as a bag at least in certain areas.

10. Device for casting cast resin or cast resin components according to one of claims 7 to 9, **characterized in that** the wall (2) of the storage container (1) is formed at least in certain areas from a flexible plastic film, for example polyvinyl chloride, polyethylene or polyethylene terephthalate.

11. Device (10) according to one of the claims 7 to 10, **characterized in that** the device (10) and/or the at least one feeder device (11) and/or the at least one storage container (1) are under a vacuum at least in certain areas.

12. Device (10) according to one of the claims 7 to 11, **characterized in that** the at least one storage container (1) is connected, preferably via a stub, to the at least one feeder device (11), and/or that the at least one storage container (1) is arranged at a height-level that is below the at least one mold (20).

13. Device (10) according to one of the claims 7 to 12, **characterized in that** a vacuum device is provided by means of which a vacuum can be created in the interior (22) of the at least one mold (20), which vacuum lies below the pressure in the interior area (3) of the at least one storage container (1).

14. Device (10) according to one of the claims 7 to 13, **characterized in that** multiple feeder devices (11) that are connected in parallel are provided with respectively one storage container (1) and preferably respectively one upstream mixing unit (13).

15. Device (10) according to claim 14, **characterized in that** at least one filler opening (21), and in particular multiple filler openings (21), of the at least one mold (20) is or are assigned to each of the feeder devices (11).

16. Device (10) according to one of the claims 7 to 15, **characterized in that** a control device (14) is provided for controlling and/or regulating the cast resin supply via the at least one feeder device (11).

17. Device (10) according to claim 16, **characterized in that** a measuring device (15), in particular a weighing device, for measuring the filling level of the at least one storage container (1) is provided, which is preferably connected to the control device (14) for controlling and/or regulating the cast resin supply.

18. Device (10) according to one of the claims 7 to 17, **characterized in that** at least one temperature control device, in particular a heat exchanger (25), is provided for controlling and/or regulating the temperature of the cast resin in the at least one storage container (1) and/or in the at least one feeder device (11), in particular in front of the filler openings (21) of the at least one mold (20).

## Revendications

1. Procédé de coulage d'une résine à couler ou de composants d'une résine à couler dans au moins un moule (20), la résine à couler étant introduite dans ledit au moins un moule (20) au moyen d'au moins un dispositif d'alimentation (11) et ledit au moins un dispositif d'alimentation (11) et/ou ledit au moins un moule (20) se trouvant au moins en sections sous vide, la résine à couler en excès et/ou la surpression étant absorbées dans au moins un contenant de stockage (1) à paroi (2) configurée sous forme flexible dans au moins deux directions orthogonales, la pression dans la zone intérieure (3) dudit au moins un contenant de stockage (1) étant maintenue pendant le coulage au moins inférieure ou égale à la pression, notamment la pression atmosphérique, dans la zone extérieure (23) dudit au moins un moule (20), la résine à couler étant mélangée à partir d'au moins deux composants de résine à couler, de préférence avec une unité de mélange (13), avant, notamment directement avant, ledit au moins un dispositif d'alimentation (11) ou ledit au moins un contenant de stockage (1) en un mélange réactif, **caractérisé en ce que** le niveau de remplissage dudit au moins un contenant de stockage (1) pendant le coulage est mesuré, notamment pesé, et **en ce que** l'alimentation de résine à couler par ledit au moins un dispositif d'alimentation (11) est ajustée en fonction du niveau de remplissage dudit au moins un dispositif de stockage (1) et/ou en fonction du taux de déchargement de résine à couler à partir dudit au moins un contenant de stockage (1), **en ce que** l'alimentation de résine à couler dans ledit au moins un contenant de stockage (1) ou ledit au moins un moule (20) est interrompue lors du dépassement d'un niveau de remplissage supérieur critique, et déclenchée lors du passage en dessous d'un niveau de remplissage inférieur critique.

2. Procédé selon la revendication 1, **caractérisé en ce que** la pression dans la zone intérieure (3) dudit au moins un contenant de stockage (1) pendant le coulage est maintenue inférieure ou égale à la pression, notamment la pression atmosphérique, dans la zone extérieure (4) dudit au moins un contenant de stockage (1), et/ou **en ce que** la pression dans la zone intérieure (3) dudit au moins un contenant de stockage (1) est maintenue pendant le coulage supérieure ou égale à la pression dans ledit au moins un moule (1) qui se trouve au moins en sections sous vide.

3. Procédé selon la revendication 1 ou 2, **caractérisé en ce qu'**en raison de la différence de pression entre ledit au moins un contenant de stockage (1) et ledit au moins un moule (20), lors d'une interruption de l'alimentation, la résine à couler en excès est transportée depuis ledit au moins un contenant de stockage (1) dans ledit au moins un moule (20).

4. Procédé selon la revendication 1, 2 ou 3, **caractérisé en ce que** ledit au moins un moule (20) est rempli par plusieurs dispositifs d'alimentation connectés en parallèle (11), avec chacun au moins un contenant de stockage (1) et de préférence chacun une unité de mélange (13) connectée en amont.

5. Procédé selon l'une quelconque des revendications 1 à 4, **caractérisé en ce que** ledit au moins un moule (20) est rempli par plusieurs ouvertures de remplissage (21) attribuées à un dispositif de remplissage (11).

6. Procédé selon l'une quelconque des revendications 1 à 5, **caractérisé en ce que** la température de la résine à couler est ajustée et/ou régulée dans ledit au moins un contenant de stockage (1) et/ou avant l'entrée dans ledit au moins un moule (20), notamment par un échangeur de chaleur (25).

7. Dispositif (10) pour le coulage d'une résine à couler ou de composants d'une résine à couler dans au moins un moule (20), comprenant au moins un dispositif d'alimentation (11) et au moins un contenant de stockage (1), la paroi (2) du contenant de stockage (1) étant configurée sous forme flexible dans au moins deux directions orthogonales pour l'absorption de la résine à couler en excès et/ou de la surpression, de sorte qu'une différence de pression entre la zone intérieure (3) et la zone extérieure (4) du contenant de stockage (1) puisse être médiée par la paroi (2), pour la réalisation d'un procédé selon l'une quelconque des revendications 1 à 6.

8. Dispositif pour le coulage d'une résine à couler ou de composants d'une résine à couler selon la revendication 7, **caractérisé en ce qu'**au moins une ouverture du contenant de stockage est prévue pour l'absorption et/ou le déchargement de résine à couler.

9. Dispositif pour le coulage d'une résine à couler ou de composants d'une résine à couler selon la revendication 7 ou 8, **caractérisé en ce que** le contenant de stockage (1) est configuré au moins en sections sous la forme d'une poche.

10. Dispositif pour le coulage d'une résine à couler ou de composants d'une résine à couler selon l'une quelconque des revendications 7 à 9, **caractérisé en ce que** la paroi (2) du contenant de stockage (1) est constituée au moins en sections par une feuille plastique flexible, par exemple en polychlorure de vinyle, en polyéthylène ou en polyéthylène téréphtalate.

11. Dispositif (10) selon l'une quelconque des revendications 7 à 10, **caractérisé en ce que** le dispositif (10) et/ou ledit au moins un dispositif d'alimentation (11) et/ou ledit au moins un contenant de stockage (1) se trouvent au moins en sections sous vide.

12. Dispositif (10) selon l'une quelconque des revendications 7 à 11, **caractérisé en ce que** ledit au moins un contenant de stockage (1) est raccordé avec ledit au moins un dispositif d'alimentation (11), de préférence par une ligne en dérivation, et/ou **en ce que** ledit au moins un contenant de stockage (1) est agencé à un niveau inférieur audit au moins un moule (20).

13. Dispositif (10) selon l'une quelconque des revendications 7 à 12, **caractérisé en ce qu'**un dispositif sous vide est prévu, avec lequel une sous-pression peut être générée à l'intérieur (22) dudit au moins un moule (20), qui est inférieure à la pression dans la zone intérieure (3) dudit au moins un contenant de stockage (1).

14. Dispositif (10) selon l'une quelconque des revendications 7 à 13, **caractérisé en ce que** plusieurs dispositifs d'alimentation connectés en parallèle (11) avec chacun un contenant de stockage (1) et de préférence chacun une unité de mélange connectée en amont (13) sont prévus.

15. Dispositif (10) selon la revendication 14, **caractérisé en ce qu'**au moins une, notamment plusieurs ouvertures de remplissage (21) dudit au moins un moule (20), sont attribuées à chacun des dispositifs d'alimentation (11).

16. Dispositif (10) selon l'une quelconque des revendications 7 à 15, **caractérisé en ce qu'**un dispositif d'ajustement (14) pour l'ajustement et/ou le réglage de l'alimentation de résine à couler par ledit au moins un dispositif d'alimentation (11) est prévu.

17. Dispositif (10) selon la revendication 16, **caractérisé en ce qu'**un dispositif de mesure (15), notamment un dispositif de pesée, est prévu pour la mesure du niveau de remplissage dudit au moins un contenant de stockage (1), qui est de préférence raccordé avec le dispositif d'ajustement (14) pour l'ajustement et/ou le réglage de l'alimentation de résine à couler.

18. Dispositif (10) selon l'une quelconque des revendications 7 à 17, **caractérisé en ce qu'**au moins un dispositif d'ajustement de la température, notamment un échangeur de chaleur (25), est prévu pour l'ajustement et/ou le réglage de la température de la résine à couler dans ledit au moins un contenant de stockage (1) et/ou dans ledit au moins un dispositif d'alimentation (11), notamment avant les ouvertures de remplissage (21) dudit au moins un moule (20).
